# EUROPÄISCHE PATENTSCHRIFT

(11) **EP 0 816 961 B1**
(45) Veröffentlichungstag und Bekanntmachung des Hinweises auf die Patenterteilung: **12.03.2003**
(21) Anmeldenummer: 97111049.9
(22) Anmeldetag: 02.07.1997
(51) Int. Cl.: G05B 23/02, G05B 19/418

(54) **Wartensystem**
System for a control-room
Système pour une salle de commande

(30) Priorität: 03.07.1996 DE 19626774
(43) Veröffentlichungstag der Anmeldung: 07.01.1998
(73) Patentinhaber: SIEMENS AKTIENGESELLSCHAFT, 80333 München (DE)
(72) Erfinder: Hofmann, Horst, Dipl.-Ing., 91088 Bubenreuth (DE)

(56) Entgegenhaltungen:
- EP-A- 0 472 169
- EP-A- 0 694 833
- WO-A-94/08309
- PATENT ABSTRACTS OF JAPAN vol. 095, no. 011, 26.Dezember 1995 & JP 07 210705 A (SHARP CORP), 11.August 1995,

## Beschreibung

Die Erfindung betrifft ein Wartensystem für eine Kraftwerksanlage

Der in einer großtechnischen Anlage, insbesondere in einer Kraftwerksanlage, ablaufende Anlagenprozeß wird üblicherweise von einer Leitwarte aus geführt. In der Leitwarte laufen ständig große Mengen von Meßdaten und Informationen zusammen, anhand derer das Bedienpersonal den Anlagenzustand überwacht und analysiert. Auf der Grundlage dieser Informationen werden Entscheidungen zur Steuerung der Anlage getroffen, zu deren Umsetzung Steuerbefehle von der Leitwarte aus in das Wartensystem der Anlage gegeben werden. Das Wartensystem ist seinerseits üblicherweise über ein Bussystem mit in der Anlage angeordneten Automatisierungs- und Steuereinheiten verbunden.

Zur Prozeßführung sind in der Leitwarte üblicherweise eine Anzahl von Wartenarbeitsplätzen angeordnet, von denen jeder eine Anzeigeeinheit zur Darstellung von Informationen und Bedieneinrichtungen zur Eingabe von Steuerbefehlen umfaßt. Der Anlagenprozeß, zu dessen Steuerung die Leitwarte ausgelegt ist, ist in seiner Gesamtheit anhand von Bedienoperationen steuerbar. Die Bedienoperationen gehen dabei über die unmittelbare Prozeßführung hinaus. So sind von der Leitwarte aus Bedienoperationen außer für die Betriebsführung, für die Prozeßführung oder für die Blockführung der Kraftwerksanlage auch für Störungsanalysen, für Diagnosen des Anlagenzustands, für Freischaltaufgaben, für Betriebsaufzeichnungen, für Wartungs- und Servicemaßnahmen oder auch für die Zugangskontrolle zur Anlage ausführbar.

Aufgrund der hohen Komplexität der in einer derartigen Leitwarte zusammengruppierten verschiedenartigen Funktionen und im Hinblick auf die verschiedenartigen Kompetenzen der handelnden Personen ist ein derartig ausgelegtes Wartensystem jedoch hinsichtlich seiner Bedienung nur bedingt flexibel. Dies gilt vor allem hinsichtlich des Personalbedarfs und der Personalauslastung bei verschiedenen Betriebszuständen der Kraftwerksanlage, wie beispielsweise einem "Geradeaus-Betrieb" mit nur geringer Personalbelastung oder einem "Störfall-Betrieb" mit hoher Personalbelastung. Besondere Situationen hinsichtlich einer Leitwartennutzung und des Personalbedarfs stellen Reparatur- oder Servicemaßnahmen dar.

In der EP 0 472 169 A2 ist ein Steuerungssystem für eine Kraftwerkswarte offenbart, bei welchem spezialisierte Automatisierungssysteme zum Einsatz kommen und bei welchen ein aufwendiges Redundanzkonzept realisiert ist. Ein derartiges Steuerungssystem ist örtlich gebunden, kostenintensiv und nur wenig flexibel.

Der Erfindung liegt daher die Aufgabe zugrunde, ein Wartensystem für eine Kraftwerksanlage anzugeben, das in einfacher Weise dynamisch an Besonderheiten im Anlagenprozeß anpaßbar und im Hinblick auf seine Bedienung besonders flexibel und somit besonders effektiv in der Personalauslastung ist.

Diese Aufgabe wird erfindungsgemäß gelöst durch ein Wartensystem mit einer Anzahl von Bedien- und Kommunikationseinrichtungen, wobei von jeder Bedien- und Kommunikationseinrichtung aus jede für den Anlagenprozeß relevante Betriebsoperation ausführbar ist.

Die Erfindung geht dabei von der Überlegung aus, daß für ein besonders flexibel bedienbares Wartensystem die Mensch-Maschine-Kommunikation von den automatisierten Steuer- und Regelprozessen entkoppelt sein sollte. Durch die Entkopplung einer zentralen Steuereinheit von den zu ihrer Bedienung erforderlichen Bedien- und Kommunikationseinrichtungen sind diese räumlich ungebunden installierbar. Ein völliger Verzicht auf einen herkömmlichen Wartenraum, in dem die Anwesenheit des Bedienpersonals erforderlich ist, und somit ein besonders flexibles Wartensystem ist dabei erreichbar, indem von jeder Betriebs- und Kommunikationseinrichtung aus jede beliebige Betriebsoperation ausführbar ist.

In vorteilhafter Ausgestaltung ist für jede Bedien- und Kommunikationseinrichtung datentechnisch ein virtuelles Wartenumfeld generierbar, das den Eindruck eines realen Wartenraumes vermittelt.

Um einen Informations- und Datenaustausch auch zwischen jeweils zwei Bedien- und Kommunikationseinrichtungen zu ermöglichen, sind diese in weiterer vorteilhafter Ausgestaltung für eine Kommunikation untereinander mittels Multimedia-Technik ausgelegt. Ein derartiges Wartensystem ist besonders zuverlässig, da alle Informationen jederzeit auf jedem Terminal zur Verfügung stehen.

Zweckmäßigerweise ist zur Steuerung der Kraftwerksanlage eine Steuereinheit vorgesehen. Beispielsweise ist die Steuereinheit eine speicherprogrammierbare Steuerung. Mittels der innerhalb der Steuereinheit ablaufenden Prozesse, z.B. Regelungs- und/oder Steuerungsprozesse, wird die Kraftwerksanlage automatisch gesteuert und überwacht.

Um ortsunabhängig, d.h. in beliebiger Entfernung von der Steuereinheit, die Anlage führen, überwachen und diagnostizieren zu können, ist ein Bussystem zur Anbindung der Bedien- und Kommunikationseinrichtung an die Steuereinheit vorgesehen. Bei dem Bussytem kann es sich beispielsweise um eine Wide Area Network handeln.

Die mit der Erfindung erzielten Vorteile bestehen insbesondere darin, daß das Wartensystem besonders flexibel an funktionsspezifische oder anlagenspezifische Erfordernisse anpaßbar ist. Der Personalaufwand zum Betrieb einer Kraftwerksanlage mit einem derartigen Wartensystem ist besonders gering. Beispielsweise ist eine Störung im Anlagenprozeß direkt vor Ort behebbar, da alle Informationen zur Diagnose dem Wartungspersonal an der Störungsstelle über ein dort installiertes oder installierbares Terminal direkt zur Verfügung stehen. Ein ständiger Dialog zwischen dem Wartungspersonal an der Störungsstelle und dem Personal in der Leitwarte ist somit für die Behebung der Störung nicht erforderlich.

Auf eine herkömmliche Leitwarte mit in einem zentralen Wartenraum angeordneten, funktionsspezifisch ausgelegten Terminals kann somit verzichtet werden. Insbesondere alle Funktionen oder Bedienoperationen, die nicht unmittelbar mit der Führung des Energieumwandlungsprozesses der Kraftwerksanlage verbunden sind, sind jederzeit von jeder Bedien- und Kommunikationseinrichtung aus ausführbar. Dazu sind alle für eine Bedienoperation erforderlichen Aktions- und Informationstechniken an jeder Bedien- und Kommunikationseinrichtung verfügbar. Jede Bedienund Kommunikationseinrichtung kann von ihrer Konzeption her auf eine Vorzugsaufgabe zugeschnitten sein, wobei jedoch auch alle anderen Informationen und Bedienoperationen jederzeit aufrufbar bzw. ausführbar sind. Die Bedien- und Kommunikationseinrichtungen sind dabei räumlich und geographisch von einer zentralen Leitwarte und voneinander unabhängig.

Bei den Bedien- und Kommunikationseinrichtungen kann es sich beispielsweise um Terminals handeln. Alternativ kann aber auch unter Einbindung von Multimedia-Technik ein Spracheingabesystem, ein Videosystem oder ein Datenhandschuh vorgesehen sein.

Eine den Eindruck eines realen Wartenraumes vermittelnde Warte kann aufgabenspezifisch an einer beliebigen Bedien- und Kommunikationseinrichtung virtuell aufgebaut werden. Je nach Aufgabe und Problemsituation kann sich das zuständige Personal auf einer beliebigen Bedien- und Kommunikationseinrichtung schrittweise eine Warte virtuell generieren und diese nach Erledigung der Aufgabenstellung wieder abbauen.

Für die direkte Prozeßführung als Vorzugsaufgabe ausgelegte Bedien- und Kommunikationseinrichtungen können, analog zu einem herkömmlichen Wartensystem, in einem zentralen (Büro-)Raum angeordnet sein, der jedoch insbesondere hinsichtlich seiner räumlichen Anordnung nicht an Randbedingungen geknüpft ist.

Beim Dauerbetrieb ("Geradeaus-Betrieb") der Kraftwerksanlage, bei dem die Personalauslastung besonders gering ist, ist die Prozeßführung beispielsweise von mobilen Terminals aus möglich, so daß das Bedienpersonal zur gleichen Zeit beispielsweise eine Anlagenbegehung durchführen kann.

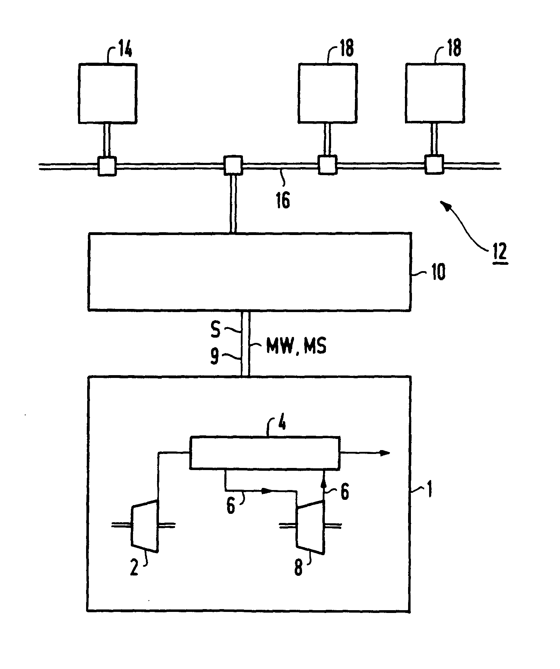

Ein Ausführungsbeispiel der Erfindung wird anhand einer Zeichnung näher erläutert. Darin zeigt die Figur ein Funktionsschema eines Wartensystems einer Kraftwerksanlage.

Als Kraftwerksanlage ist in der Figur schematisch eine Gas- und Dampfturbinenanlage 1 dargestellt. Diese umfaßt eine Gasturbine 2 und einen dieser rauchgasseitig nachgeschalteten Abhitzedampferzeuger 4, dessen Heizflächen in den Wasser-Dampf-Kreislauf 6 einer Dampfturbine 8 geschaltet sind.

Von (nicht dargestellten) Sensoren erfaßte Meßwerte MW sowie von (nicht dargestellten) Meldeelementen abgegebene Meldesignale MS werden über ein Anlagenbussystem 9 einer zentralen Steuereinheit 10 des Wartensystems 12 der Gas- und Dampfturbinenanlage 1 zugeführt.

In der Steuereinheit 10, beispielsweise in dessen Automatisierungseinheiten, werden die Meßwerte MW und die Meldesignale MS vorverarbeitet. Gegebenenfalls werden Steuersignale S an Komponenten der Gas- und Dampfturbinenanlage 1 abgegeben. Die zusammenlaufenden Messungs-, Regelungs- und Steuerungsereignisse werden in einem an die zentrale Steuereinheit 10 angeschlossenen zentralen Informationssystem 14 des Wartensystems 12 hinterlegt und stehen somit beispielsweise für spätere Diagnosen zur Verfügung.

Die zentrale Steuereinheit 10 ist an ein lokales Netzwerk 16 als systemgebundenes Bussystem angeschlossen. Alternativ kann auch ein Wide Area Network vorgesehen sein. Über das Netzwerk 16 ist die zentrale Steuereinheit 10 von an dieses angeschlossenen oder anschließbaren Bedien- und Kommunikationseinrichtungen 18 bedienbar. Die Bedien- und Kommunikationseinrichtungen 18 können dabei ortsfest installiert oder auch mobil sein. Im Ausführungsbeispiel sind als Bedien- und Kommunikationseinrichtungen 18 Terminals vorgesehen, die für eine Kommunikation untereinander mittels Multimedia-Technik ausgelegt sind.

Der Anlagenprozeß der Gas- und Dampfturbinenanlage 1 ist über das Wartensystem 12 anhand von einer Vielzahl von Betriebsoperationen steuerbar. Dabei ist jede für den Anlagenprozeß relevante Betriebsoperation von jeder Bedien- und Kommunikationseinrichtung 18 aus ausführbar. Dazu ist für jede Bedien- und Kommunikationseinrichtung 18 datentechnisch ein virtuelles Wartenumfeld generierbar, das den Eindruck eines realen Wartenraumes vermittelt.

## Patentansprüche

1. Wartungssystem (12) für eine Kraftwerksanlage (1), deren Anlagenprozeß anhand von Betriebsoperationen steuerbar ist, wobei eine zentrale Steuereinheit (10) zur Steuerung der Kraftwerksanlage zwischen die Kraftwerksanlage (1) und ein Netzwerk (16), an welches eine Anzahl von Bedien- und Kommunikationseinrichtungen (18) angebunden ist, geschaltet ist, welche Meßwerte (MW) und Meldesignale (MS) vorverarbeitet, wobei über das Netzwerk (16) die zentrale Steuereinheit (10) von den Bedien- und Kommunikationseinrichtungen (18) bedienbar ist, **dadurch gekennzeichnet, daß** von jeder Bedien- und Kommunikationseinrichtung (18) aus jede für den Anlagenprozeß relevante Betriebsoperation ausführbar ist, wobei für jede Bedien- und Kommunikationseinrichtung (18) datentechnisch ein virtuelles Wartenumfeld generierbar ist, das den Eindruck eines realen Wartenraumes vermittelt und wobei die Bedien- und Kommunikationseinrichtungen (18) für eine Kommunikation untereinander mittels Multimedia-Technik ausgelegt sind.

## Claims

1. Maintenance system (12) for a power plant (1), the plant process of which can be controlled on the basis of running operations, with a central control unit (10) for the control of the power plant being connected between the power plant (1) and a network (16), to which a number of service and communications devices (18) are linked, that preprocesses measured values (MW) and status signals (MS), with it being possible to operate the central control unit (10) by the service and communications devices (18) by way of the network (16), **characterised in that** each running operation that is relevant to the plant process can be carried out from each service and communications device (18), with it being possible to generate, with the use of data systems technology, for each service and communications device (18) a virtual control-room environment that conveys the impression of a real control room, and with the service and communications devices (18) being designed to communicate one with the other by means of multimedia technology.

## Revendications

1. Système (12) de surveillance d'une centrale (1) électrique, dont le processus peut être commandé au moyen d'opérations de fonctionnement, une unité (10) centrale de commande destinée à commander la centrale électrique étant montée entre la centrale (1) électrique et un réseau (16) auquel sont reliés un certain nombre de dispositifs (18) de service et de communication, unité centrale qui prépare des valeurs (MW) mesurées et des signaux (MS) indicateurs, l'unité (10) centrale de commande pouvant être servie par l'intermédiaire du réseau (16), par les dispositifs (18) de service et de communication, **caractérisé en ce que** chaque opération de fonctionnement pertinente pour le processus de la centrale peut être réalisée à partir de chaque dispositif (18) de service et de communication, un champ virtuel de surveillance pouvant être engendré du point de vue de la technique des données pour chaque dispositif (18) de service et de communication, ce champ donnant l'impression d'une salle réelle de surveillance et les dispositifs (18) de service et de communication étant conçus pour une communication entre eux au moyen d'une technique multimédia.
